# EUROPEAN PATENT APPLICATION

(11) **EP 3 392 727 A1**
(43) Date of publication of application: **24.10.2018**
(21) Application number: 16875385.3
(22) Date of filing: 29.11.2016
(51) Int. Cl.: G05B 23/02

(54) **CONTROL DEVICE, MONITORING SYSTEM, CONTROL PROGRAM, AND RECORDING MEDIUM**

(30) Priority: 15.12.2015 JP 2015244444
(71) Applicant: Omron Corporation, Kyoto-shi, Kyoto 600-8530 (JP)
(72) Inventor: OYAMA, Satoshi, Kyoto-shi Kyoto 600-8530 (JP); TAKAYAMA, Yohei, Kyoto-shi Kyoto 600-8530 (JP); FURUKAWA, Tomohisa, Kyoto-shi Kyoto 600-8530 (JP); FURUTA, Katsuhisa, Kyoto-shi Kyoto 600-8530 (JP)
(74) Representative: Emde, Eric
(86) International application number: PCT/JP2016/085364
(87) International publication number: WO 2017/104401

(57) **Abstract**

Provided is a control device by which the relationship of changes in measurement unit data, that is, a value indicating an operating state of a control object as measured by measurement units, excluding control data necessary for controlling the control object, with respect to machine data, that is, the data necessary for controlling the control object, can be easily checked. In the case of this control device (10) for controlling a machine on the basis of multiple machine data acquired from the machine, a monitoring data acquisition instruction unit (12) instructs a vibration collection unit (3) and a sound collection unit (7) to acquire data at arbitrarily settable times, and a storage instruction unit (14) causes the acquired data and/or feature amounts calculated from the data, multiple machine data acquired at the same time as the measurement unit data, and information about the acquisition date/time of the data to be stored into a database (30) in association with one another.

## Description

### BACKGROUND

### Technical Field

The present invention relates to a control device such as a programmable logic controller (PLC), a monitoring system using the control device, a control program, and a recording medium.

### Description of Related Art

A control device such as a PLC is used to a control machine (a control target) installed in a factory. The control device has a plurality of input/output functions, sequentially reads values output from sensors attached to the machine, for example, and saves data (referred to as machine data hereinafter). The saved machine data is used to control the machine. For example, Patent Document 1 discloses a control device which is connected to a database and accumulates saved machine data in the database.

In addition, in a machine equipped with a motor, vibration and sound are generated according to driving of the motor. The generated vibration and sound are within allowable ranges when the machine does not have an abnormality (e.g., a defect in a component part such as a bearing, a fragment, damage due to fatigue, misalignment in assembly of component parts, contamination by foreign substances, etc.). However, the vibration and sound may increase due to occurrence of a mechanical abnormality and it may eventually causes failure of the machine. Accordingly, in conventional techniques, vibration and sound are checked in a state in which the machine is operating to determine whether the machine has an abnormality. For example, Patent Document 2 discloses an inspection device that can be used to check such vibration and sound, which inspects whether a machine is normal by measuring vibration and sound using a measuring instrument and analyzing waveforms of analog signals.

### [Prior Art Literature]

### [Patent Literature]

[Patent Document 1] Japanese Patent Application Laid-Open (JP-A) No. 2014-099061
[Patent Document 2] Japanese Patent Application Laid-Open No. 2001-091414

### SUMMARY

### [Technical Problem]

When a machine starts to change from a normal operation state to an abnormal operation state, vibration and sound also change. Accordingly, a sign of an abnormality can be detected from variations in vibration and sound. In addition, since machine data also changes when the machine tends to operate abnormally, it is possible to specify the cause of an abnormality and prevent failure beforehand by checking accumulated machine data when the sign of the abnormality is detected.

However, although the aforementioned control device accumulates the machine data, the control device is not cooperated with an inspection device and the control device and the inspection device acquire data at respective timings. Accordingly, it is necessary to perform a complicated operation of extracting the machine data for a time when abnormal vibration and sound are generated from the accumulated machine data and re-plotting in accordance with data acquisition timing of the inspection device in order to check the machine data when the abnormal vibration and sound are generated.

An object of the present invention devised to solve the aforementioned problem is to provide a control device which can easily check a relationship between a change of measuring instrument data indicating an operation state of a control target (machine) acquired by a measuring instrument and control data (machine data) for controlling the control target and further can easily detect a sign of an abnormality of the control target and specify the cause of the abnormality.

### [Solution to Problem]

To solve the aforementioned problem, a control device in an embodiment of the present invention is the control device to output a control command for a control target on the basis of a plurality of control data acquired from the control target, and the control device includes a measuring instrument data acquisition instruction unit which instructs a measuring instrument for measuring values indicating an operating state of the control target to acquire data at an arbitrarily settable timing, and a storage instruction unit which associates at least one of data of the measuring instrument acquired according to instruction of the measuring instrument data acquisition instruction unit and a feature quantity calculated according to the data, the plurality of control data acquired at the same time at which the data of the measuring instrument is acquired, and information which can specify the date and time when the data of the measuring instrument is acquired with one another and stores the associated data and information in a storage device.

A monitoring system in an embodiment of the present invention includes the control device, the storage device, and an information processing device having a trend graph creation display unit which accesses the storage device, generates a trend graph of a monitoring index determined on the basis of the stored data and causes a display device to display the trend graph.

Meanwhile, the control device may be realized by a computer. In this case, a control program which causes the computer to function as the measuring instrument data acquisition instruction unit and the storage instruction unit of the control device, and a recording medium in which the control program is recorded are also included in the scope of the present invention.

### [Advantageous Effects of Invention]

According to an embodiment of the present invention, it is possible to provide a control device which can easily check a relationship between a variation in measuring instrument data indicating the operation state of the control target (machine) acquired by the measuring instrument and the control data (machine data) for controlling the control target, and further can easily detect a sign of an abnormality of the control target and specify the cause of the abnormality.

### BRIEF DESCRIPTION OF THE DRAWINGS

Fig. 1 is a block diagram illustrating an example of a configuration of a monitoring system including a control device according to an embodiment of the present invention.
Fig. 2 is a block diagram illustrating detailed configurations of the control device, a DB and a PC included in the monitoring system, and a data flow in the monitoring system.
Fig. 3 is a flowchart illustrating each of processing procedures of the control device, a vibration collecting unit, a sound collecting unit, an image processing system and the PC included in the monitoring system.
Fig. 4 is a diagram illustrating an example of a trend graph display screen displayed on a monitor of the PC.
Fig. 5 is a diagram illustrating an example of a trend graph displayed on the trend graph display screen.
Fig. 6 is a diagram illustrating an example of a vibration waveform analysis screen displayed on the monitor of the PC.

### DESCRIPTION OF THE EMBODIMENTS

Hereinafter, embodiments of the present invention will be described in detail with reference to the drawings. In the drawings, the same signs will be attached to the same or corresponding parts and description thereof will not be repeated.

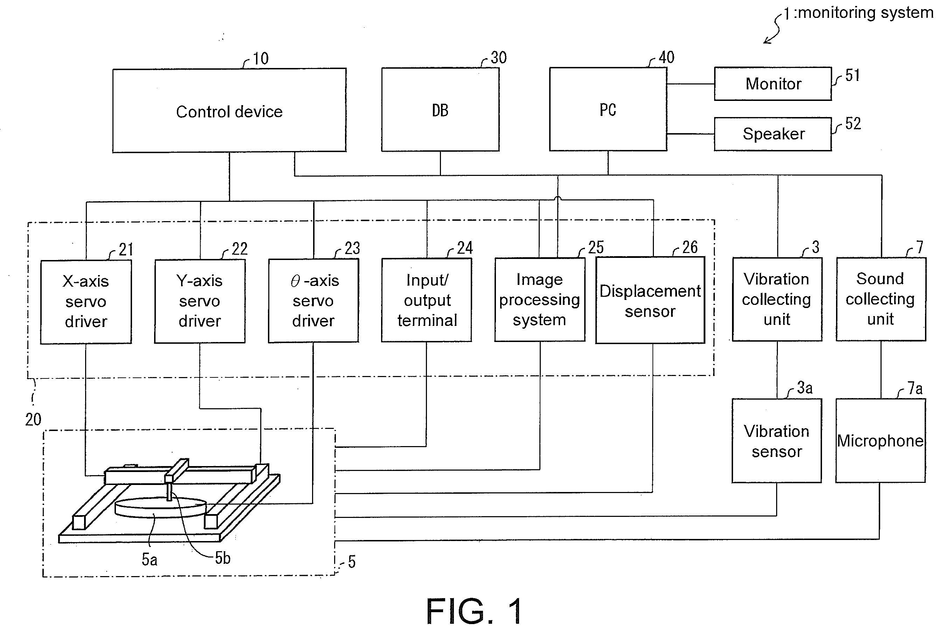

Fig. 1 is a block diagram illustrating an example of a configuration of a monitoring system 1 including a control device 10 according to embodiments of the present invention. First, an overview of the monitoring system 1 will be described with reference to Fig. 1.

As shown in Fig. 1, the collector 1 includes the control device 10 which controls a machine 5 that is a control target, a machine data measurement unit 20, a database (DB) 30, a personal computer (PC, information processing device) 40, a vibration collecting unit (measuring instrument, vibration measuring unit) 3, and a sound collecting unit (measuring instrument, sound measuring instrument) 7. Meanwhile, although the DB 30 and the PC 40 are disclosed as separate hardware in Fig. 1, the DB 30 and the PC 40 may be the same hardware.

For example, the control device 10 is an industrial control device such as a programmable logic controller (PLC). The control device 10 controls each part of the machine 5 by transmitting a control command to the machine 5 on the basis of machine data (control data) which will be described below received from the machine 5.

For example, the machine 5 is a manufacturing device installed in a factory. In the present embodiment, the machine 5 includes an X-axis servo motor (not shown), a Y-axis servo motor (not shown), and a θ-axis servo motor (shaft).

The machine data measurement unit 20 is interposed between the control device 10 and the machine 5 and sequentially measures machine data necessary for the control device 10 to control the machine 5. In the present embodiment, the machine data measurement unit 20 includes an X-axis servo driver 21, a Y-axis servo driver 22, a θ-axis servo driver 23, an input/output terminal 24, an image processing system 25, and a displacement sensor 26.

The X-axis/Y-axis/θ-axis servo drivers 21 to 23 are responsible for driving the X-axis/Y-axis/θ-axis servo motors provided in the machine 5 respectively. Among these, the Y-axis servo driver 22 transmits a feedback current position of the Y axis to the control device 10 as one of the machine data. The θ-axis servo driver 23 transmits a feedback current torque of the θ axis to the control device 10 as one of the machine data.

In addition, a thermocouple is installed in each of the X-axis/Y-axis/θ-axis servo motors. The input/output terminal 24 measures the temperature of each servo motor and transmits the temperature to the control device 10 as one of the machine data. The displacement sensor 26 measures a position variation of a predetermined axis, for example, Y axis, and transmits the position variation to the control device 10 as one of the machine data.

The image processing system 25 photographs an image and calculates a separation distance on the basis of a positional relationship between the predetermined members in the machine 5 from the image. The image processing system 25 transmits the calculated separation distance to the control device 10 as one of the machine data. In the present embodiment, based on the image obtained by photographing a positional relationship between a disk 5a and a contact pin 5b, the separation distance between them is calculated.

In addition, as will be described below in detail, after the image processing system 25 receives data acquisition date and time information which will be described below from the control device 10, the image processing system 25 transmits image data corresponding to the data acquisition date and time indicated by the information to the DB 30 as one of monitoring data.

The vibration collecting unit 3 reads a detection value of a vibration sensor 3a arranged at the side of the machine 5 to acquire vibration waveform data when the control device 10 instructs the vibration collecting unit 3 to start acquisition of the vibration waveform data. The vibration collecting unit 3 transmits some of the acquired waveform data to the control device 10 and transmits the entire waveform data to the DB 30 as one of the monitoring data. For example, an acquisition timing (sampling period) of the vibration waveform data of the vibration collecting unit 3 is 25.6 kHz.

The sound collecting unit 7 acquires sound data of sound collected by a microphone 7a arranged at the side of the machine 5 when the control device 10 instructs the sound collecting unit 7 to start acquisition of the sound data. The sound collecting unit 7 transmits the acquired sound data to the DB 30 as one of monitoring data.

The control device 10 executes a sequence control for controlling ON/OFF of an actuator (each of the X-axis/Y-axis/θ-axis servo motors) of the machine 5 and a motion control for continuously controlling operation displacement, operation speed and the like of the actuator according to the machine data sequentially measured by the machine data measurement unit 20.

As described above, the temperature of each of the X-axis/Y-axis/θ-axis servo motors, a Y-axis position variation, the separation distance between the disc 5a and the contact pin 5b, the feedback current position of the Y axis, and the feedback current torque of the θ axis are acquired as the machine data in the present embodiment.

In addition, as will be described later, the control device 10 causes the vibration collecting unit 3, the sound collecting unit 7 and the image processing system 25 to acquire the vibration waveform data, sound data and image data as monitoring data at a predetermined timing (monitoring data acquisition timing) and associates the acquired monitoring data with the machine data and the data acquisition date and time information acquired at the same timing. Further, the control device 10 calculates waveform feature quantity on the basis of the vibration waveform data acquired by the vibration collecting unit 3 and also associates the waveform feature quantity as one of the monitoring data in the same manner.

The PC 40 includes a monitor 51, a speaker 52, a keyboard (not shown), a mouse (not shown) and the like. The PC 40 stores machine data received from the control device 10 in the DB 30 according to instruction of the control device 10.

In addition, as will be described below, the PC 40 creates a trend graph showing a trend with respect to the waveform feature quantity and the machine data, displays the trend graph on the monitor 51 with reference to the DB 30, and displays an analysis result of the vibration waveform data at a designated data acquisition date and time or reproduces the image data and the sound data at the designated data acquisition date and time.

The DB 30 accumulates the machine data and the waveform feature quantity transmitted from the control device 10 via the PC 40 and the monitoring data transmitted from the vibration collecting unit 3, the sound collecting unit 7 and the image processing system.

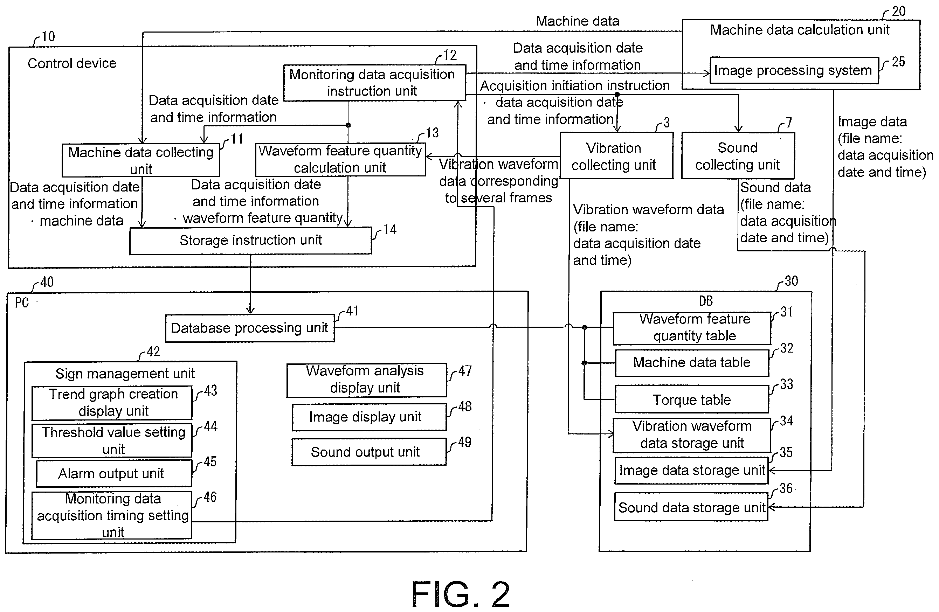

Fig. 2 is a block diagram illustrating detailed configurations of the control device 10, the DB 30 and the PC 40 included in the monitoring system 1 and a data flow in the monitoring system 1. Next, a detailed configuration of each part of the monitoring system 1 and a data flow will be described with reference to FIG. 2.

As shown in Fig. 2, the control device 10 includes a machine data collecting unit 11, a monitoring data acquisition instruction unit (measuring instrument data acquisition instruction unit) 12, a waveform feature quantity calculation unit 13, and a storage instruction unit 14.

The machine data collecting unit 11 receives and collects the machine data sequentially measured from the machine data measurement unit 20.

The monitoring data acquisition instruction unit 12 instructs the vibration collecting unit 3 and the sound collecting unit 7 to start acquisition of the vibration waveform data and the sound data when a monitoring data acquisition timing for obtaining the monitoring data comes. The monitoring data acquisition instruction unit 12 adds the data acquisition date and time information including acquisition start time of the monitoring data and instructs to start. In addition, the monitoring data acquisition instruction unit 12 transmits the data acquisition date and time information to the machine data collecting unit 11, the waveform feature quantity calculation unit 13 and the image processing system 25 of the machine data measurement unit 20 at the monitoring data acquisition timing.

The monitoring data acquisition timing can be arbitrarily set by a user. In the present embodiment, the monitoring data acquisition timing is arbitrarily set by a monitoring data acquisition timing setting unit 46 which is included in the PC 40 and will be described below.

The machine data collecting unit 11 extracts the machine data corresponding to the data acquisition date and time information from the collected machine data and transmits the machine data to the storage instruction unit 14 when the data acquisition date and time information is received from the monitoring data acquisition instruction unit 12. The machine data collecting unit 11 adds the data acquisition date and time information to the machine data and transmits the machine data.

The waveform feature quantity calculation unit 13 calculates the waveform feature quantity by performing filter processing, FFT (Fast Fourier Transform) processing, feature quantity calculation processing and the like when the vibration waveform data corresponding to several frames is received from the vibration collecting unit 3. The waveform feature quantity calculation unit 13 adds the data acquisition date and time information to the calculated waveform feature quantity and transmits the waveform feature quantity to the storage instruction unit 14.

The storage instruction unit 14 associates the machine data received from the machine data collecting unit 11, the waveform feature quantity received from the waveform feature quantity calculation unit 13, and the same data acquisition date and time information added thereto with one another, transmits the associated data and information to the PC 40 and instructs that the transmitted data and information be stored in the DB 30.

The vibration collecting unit 3 measures and acquires the vibration waveform data for a predetermined time when the monitoring data acquisition instruction unit 12 of the control device 10 instructs the data acquisition date and time information and an acquisition start of the vibration waveform data. The vibration collecting unit 3 transmits some of the acquired vibration waveform data, for example, the vibration waveform data corresponding to 5 frames, to the control device 10 for waveform feature quantity calculation. In addition, the vibration collecting unit 3 associates all of the acquired vibration waveform data with the data acquisition date and time information received along with the acquisition start instruction, transmits the associated data and information to the DB 30 and causes the DB 30 to store the associated data and information. Specifically, the file name of the vibration waveform data is used as the data acquisition date and time.

The sound collecting unit 7 acquires the sound data for a predetermined time when the monitoring data acquisition instruction unit 12 of the control device 10 instructs an acquisition start of the sound data. The sound collecting unit 7 associates the acquired sound data corresponding to the predetermined time with the data acquisition date and time information received along with the acquisition start instruction, transmits the associated data and information to the DB 30 and causes the DB 30 to store the associated data and information. Specifically, a file name of the voice data is used as the data acquisition date and time.

When the image processing system 25 receives the data acquisition date and time information from the monitoring data acquisition instruction unit 12 of the control device 10, the image processing system 25 associates the image data corresponding to a predetermined time from the time indicated by the data acquisition date and time with the received data acquisition date and time information, transmits the associated data and information to the DB 30 and causes the DB 30 to store the associated data and information. Specifically, a file name of the image data is used as the data acquisition date and time.

The DB 30 includes a waveform feature quantity table 31, a machine data table 32, a torque table 33, a vibration waveform data storage unit 34, an image data storage unit 35, and a sound data storage unit 36.

The vibration waveform data storage unit 34 accumulates the vibration waveform data that has a data acquisition date and time as a file name and is transmitted from the vibration collecting unit 3. The image data storage unit 35 accumulates the image data that has a data acquisition date and time as a file name and is transmitted from the image processing system 25. The sound data storage unit 36 accumulates the sound data that has a data acquisition date and time added to a file name and is transmitted from the sound collecting unit 7.

The PC 40 includes a database processing unit 41, a sign management unit 42, a waveform analysis display unit 47, an image display unit (output unit) 48, and a sound output unit (output unit) 49.

When the database processing unit 41 receives the machine data, the waveform feature quantity and the data acquisition date and time information which are associated with one another from the storage instruction unit 14 according to an instruction of the storage instruction unit 14 of the control device 10, the database processing unit 41 stores them in the DB 30. The waveform feature quantity is associated with the data acquisition dates and times and stored in the waveform feature quantity table 31. Among the machine data, the temperature of each of the X-axis/Y-axis/θ-axis servo motors, a position variation of the Y axis, the separation distance between the disc 5a and the contact pin 5b, and a feedback current position of the Y axis are associated with a data acquisition date and time and stored in the machine data table 32. A feedback current torque of the θ axis of the machine data is associated with the data acquisition date and time and stored in the torque table 33.

The sign management unit 42 includes a trend graph creation display unit 43, a threshold value setting unit 44, an alarm output unit 45, and the monitoring data acquisition timing setting unit 46.

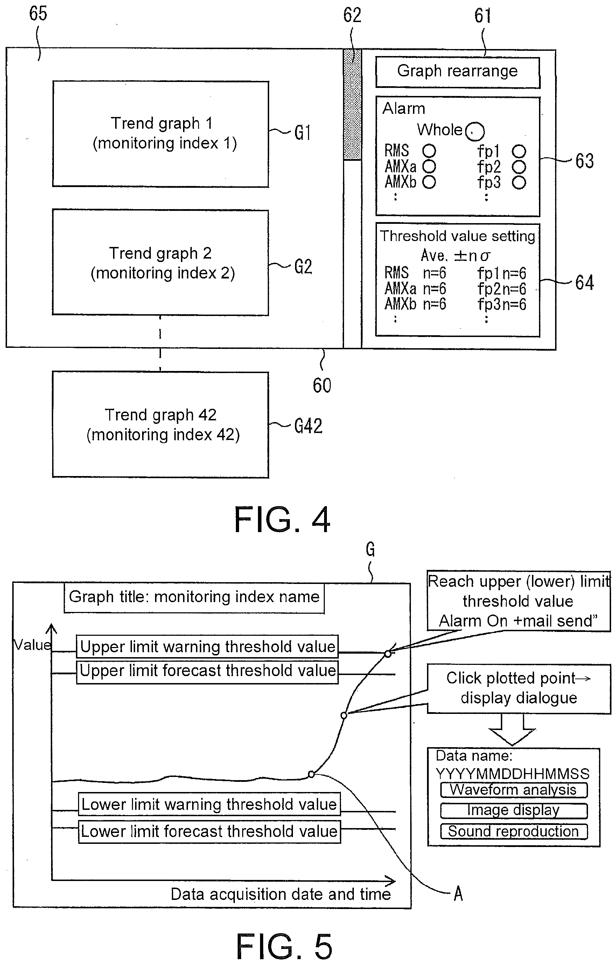

The trend graph creation display unit 43 creates each trend graph (refer to Fig. 5) of a monitoring index indicating a degree of normality/abnormality of the machine 5 using a shift amount from a reference value or the like with reference to the waveform feature quantity table 31, the machine data table 32 and the torque table 33 in the DB 30, and displays the created trend graph on the monitor 51 (refer to Fig. 1). The trend graph is a graph representing monitoring indexes in a time series for each data acquisition date and time and indicates a monitoring index change.

In the present embodiment, the trend graph creation display unit 43 creates 42 types of trend graphs using 42 types of monitoring indexes, for example, and vertically arranges and displays the trend graphs in one window to enable them to be scrolled. The details of the 42 types include 35 types that are waveform feature quantities (an effective value, peak amplitudes A to E, impact degrees A to E, specific frequency components according to frequency analysis,...) and 7 types that are the machine data, which include 3 types of temperatures of the X-axis/Y-axis/θ-axis servo motors, the separation distance between the disc 5a and the contact pin 5b, a position variation of the Y axis, a feedback current position of the Y axis, and a eedback current torque of the θ axis.

The threshold value setting unit 44 sets a threshold value for each monitoring index, that is, each trend graph. For example, the threshold value setting unit 44 has a function of automatically setting a threshold value using the average value or deviation of monitoring indexes. Further, the threshold value setting unit 44 displays a threshold value setting screen 64 (refer to Fig. 4) for setting a threshold value, which will be described below, on the monitor 51, and receives setting by the user using the screen. In addition, when a failure of the machine 5 is discovered, the user may input a failure occurrence time to the control device 10 and the threshold value setting unit 44 may set a threshold value for determining an allowable range on the basis of a monitoring index value at the input failure occurrence time.

In the present embodiment, an upper limit forecast threshold value and a lower limit forecast threshold value for making a forecast prior to warning are also set in addition to an upper limit warning threshold value and a lower limit warning threshold value for providing a warning. A threshold value is displayed on a trend graph G, as will be described later.

The alarm output unit 45 displays alarm ON on an alarm display screen 63 (refer to Fig. 4) which will be described below in the monitor 51 when a monitoring index value exceeds the upper limit warning threshold value or the lower limit warning threshold value. Further, an alarm sound can be generated or notified to a pre-registered transmission destination using mail instead of in addition to or in addition to display on the alarm screen.

The monitoring data acquisition timing setting unit 46 accepts setting of a monitoring data acquisition timing in the control device 10. The monitoring data acquisition timing setting unit 46 displays a setting screen (not shown) for setting the monitoring data acquisition timing on the monitor 51, and the user sets the monitoring data acquisition timing through the screen. The monitoring data acquisition timing setting unit 46 transmits the set monitoring data acquisition timing to the monitoring data acquisition instruction unit 12 of the control device 10.

The monitoring data acquisition timing may be set in association with a control command for the machine 5 or a machine data change which is a result of the control command in addition to being set by a date and time such as a predetermined time on alternate days.

For example, the monitoring data acquisition timing may be a timing at which a control command for changing the rotation frequency of the X-axis servo motor from A to B is output, a timing at which the machine data indicating actual change of the rotation frequency of the X-axis servo motor from A to B changes, and a timing at which the machine data indicating that the Y axis actually returns to the initial position changes.

By setting the monitoring data acquisition timing in association with the control command for the machine 5 or the machine data change which is the result of the control command, the monitoring data acquisition timing can be set in association with the moment when a load is applied to the machine 5, a time when the machine 5 initiates a specific (predetermined) certain operation, or an operation in which the machine 5 has had a failure in the past, and thus valid data can be acquired with a smaller amount of data by detecting the sign of the abnormality.

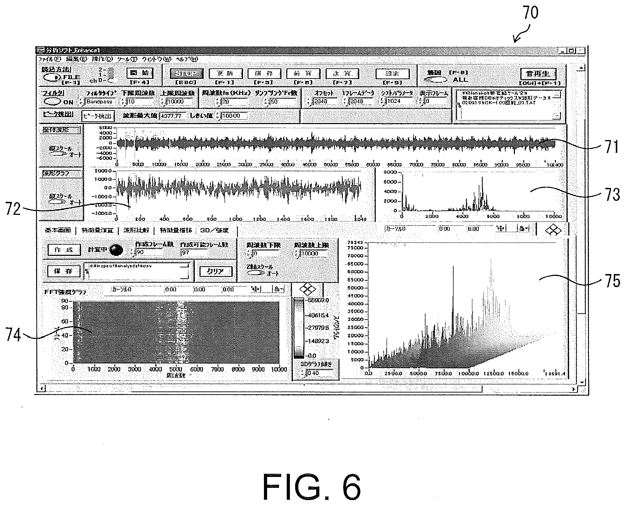

When an analysis of the vibration waveform data is instructed, the waveform analysis display unit 47 acquires the vibration waveform data having the file name of a data acquisition date and time for which the analysis is instructed with reference to the vibration waveform data storage unit 34 of the DB 30, analyzes the vibration waveform data and displays a vibration waveform analysis screen 70 to be described below (refer to Fig. 6) which includes the analysis result on the monitor 51 (refer to Fig. 1).

When image display is instructed, the image display unit 48 acquires the image data having the file name of the data acquisition date and time for which the analysis is instructed with reference to the image data storage unit 35 of the DB 30 and displays the image data on the monitor 51 (refer to Fig. 1).

When a sound reproduction is instructed, the sound output unit 49 acquires the sound data having the file name of the data acquisition date and time for which the analysis is instructed with reference to the sound data storage unit 36 of the DB 30 and outputs the sound from the speaker 52 (refer to Fig. 1).

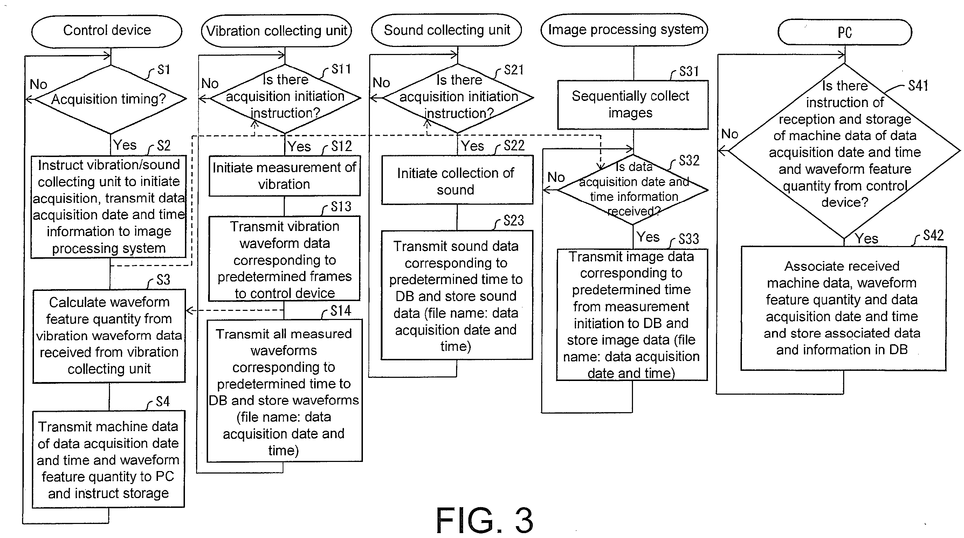

Fig. 3 is a flowchart illustrating processing of each of the control device 10, the vibration collecting unit 3, the sound collecting unit 7, the image processing system 25 and the PC 40 included in the monitoring system 1. Next, a processing flow of each part of the monitoring system 1 will be described with reference to Fig. 3.

As shown Fig. 3, the control device 10 constantly determines whether it is a monitoring data acquisition timing (S1). The control device 10 receives and collects sequentially measured machine data from the machine data measurement unit 20 while performing determination in S1.

When a monitoring data acquisition timing is determined in S1, the control device 10 proceeds to S2 and adds the data acquisition date and time information to the vibration collecting unit 3 and the sound collecting unit 7 to instruct an acquisition start of the vibration waveform data and the sound data. In addition, the control device 10 transmits the data acquisition date and time information to the image processing system 25.

The vibration collecting unit 3 and the sound collecting unit 7 constantly determine whether they are instructed to initiate data acquisition (S11 and S21). When it is determined that the vibration collecting unit 3 and the sound collecting unit 7 are instructed in S11 and S21 after passing S2 of the control device 10, S12 and S22 are proceeded, and the vibration measurement and the sound collection are initiated. The vibration measurement and the sound collection are performed for a predetermined time from initiation. During this time, the vibration collecting unit 3 transmits the acquired vibration waveform data corresponding to a predetermined number of frames to the control device 10 for waveform feature quantity calculation (S13).

The control device 10 calculates a waveform feature quantity when the vibration waveform data corresponding to several frames is received from the vibration collecting unit 3 through S13 of the vibration collecting unit 3 (S3). Subsequently, the control device 10 associates the calculated waveform feature quantity and the machine data corresponding to the date and time of the data acquisition date and time information transmitted in S2 with the data acquisition date and time information transmitted in S2, transmits the associated data and information to the PC 40 and instructs the PC 40 to store the associated data and information in the DB 30 (S4).

When the vibration measurement and the sound collection for the predetermined time are completed, the vibration collecting unit 3 and the sound collecting unit 7 proceed to S14 and S23, attach a file name corresponding to the date and time of the data acquisition date and time information received in S11 to the acquired vibration waveform data and the sound data, transmit the vibration waveform data and the sound data respectively attached with the file name to the DB 30 and instruct the DB 30 to store the data.

The image processing system 25 constantly determines whether the data acquisition date and time information has been received from the control device 10 (S32) while sequentially photographing images in order to acquire the machine data (S31). When it is determined that the data acquisition date and time information has been acquired in S32, the image processing system 25 proceeds to S33, attaches a file name corresponding to the date and time of the data acquisition date and time information received in S31, transmits the image data corresponding to the date and time of the received data acquisition date and time information to the DB 30 and instructs the DB 30 to store the image data. Here, if the image data transmitted to the DB 30 is a moving image, the image data has the same length as the time for which the vibration collecting unit 3 and the sound collecting unit 7 perform measurement and sound collection in S12 and S22.

The PC 40 receives the associated data acquisition date and time information, machine data and waveform feature quantity from the control device 10 and continuously determines whether storage of the associated data acquisition date and time information, machine data and waveform feature quantity is instructed (S41). When YES is determined in S41, the PC 40 proceeds to S42 and stores the associated data acquisition date and time information, machine data and waveform feature quantity in the DB 30.

Fig. 4 is a diagram illustrating an example of the trend graph display screen 60 displayed on the monitor 51 of the PC 40. As shown in Fig. 4, 42 types of trend graphs G1 to G42 created using the above-described 42 types of monitoring indexes are arranged vertically and displayed in one window 65 to enable them to be scrolled. All of the 42 types of trend graphs G1 to G42 can be checked by operating a scroll bar 62 provided to the window 65.

In addition, the 42 types of trend graphs can be rearranged by clicking a graph rearrangement button 61 displayed at the side of the window 65. The trend graphs G1 to G42 are displayed in the order of being stored in the DB 30 until they are instructed to be rearranged. When rearrangement of the trend graphs is instructed, for example, a display order thereof may be rearranged in a descending order of the amount of variation from previous measurement.

In addition, the alarm display screen 63 is displayed at the side of the window 65, and whole alarm and a forecast alarm and a warning alarm for each monitoring index are displayed on the screen 63. When a monitoring index value reaches the upper limit forecast threshold value or the lower limit forecast threshold value, the alarm output unit 45 displays a forecast alarm of the monitoring index (trend graph) as ON. In addition, when a monitoring index value reaches the upper limit warning threshold value or the lower limit warning threshold value, a warning alarm of the monitoring index (trend graph) is displayed as ON.

The whole alarm is an alarm common for all monitoring indexes. When any one of the monitoring indexes reaches the upper limit warning threshold value or the lower limit warning threshold value, the alarm output unit 45 displays the whole alarm as ON. It is possible to clearly check that any one of the 42 types of monitoring indexes reaches the upper limit warning threshold value or the lower limit warning threshold value by displaying the whole alarm as ON. When all of the monitor indexes do not exceed the upper limit warning threshold value and the lower limit warning threshold value, the alarm output unit 45 displays the whole alarm as OFF. Meanwhile, in the example of Fig. 4, warning levels are switched by expressing a forecast alarm in yellow and expressing a warning alarm in red, for example.

In addition, the aforementioned threshold value setting screen 64 is displayed below the alarm display screen 63, as shown in Fig. 4, and thus each monitoring index can be set and changed using the screen 64.

Fig. 5 is a diagram illustrating an example of a trend graph G displayed on the trend graph display screen 60. As shown in Fig. 5, the trend graph G has the vertical axis representing the monitoring index values and the horizontal axis corresponding to a time axis of the data acquisition dates and times. In the example of Fig. 5, a monitoring index value starts to increase with a point A as the boundary. The time axis of the horizontal axis is common for trend graphs G1 to G42. Accordingly, a trend graph G which is in an abnormality trend can be easily discovered by scrolling the trend graphs G1 to G42. In addition, it is possible to accurately specify a time optimized for abnormality detection, specify an index valid for abnormality detection, and determine and review a threshold value valid for abnormality detection by using such trend graphs G1 to G42.

In addition, it is possible to designate a data acquisition date and time by matching the cursor of the mouse at a plotted point in the trend graph G. Furthermore, when the cursor is matched, buttons indicating the waveform analysis, the image display and the sound reproduction are displayed as dialogues.

When the waveform analysis button is clicked, the waveform analysis display unit 47 (Fig. 2) performs a waveform analysis on the vibration waveform data corresponding to the data acquisition date and time at which the cursor is positioned and displays the vibration waveform analysis screen 70, which will be described later (refer to Fig. 6).

In addition, the image data corresponding to the data acquisition date and time indicated by the position of the cursor is displayed when the image display button is clicked, and the sound data corresponding to the data acquisition date and time indicated by the position of the cursor is reproduced when the sound reproduction button is clicked.

Furthermore, the upper limit warning threshold value and the lower limit warning threshold value, and the upper limit forecast threshold value and the lower limit forecast threshold value are displayed in lines in the trend graph G, as shown in Fig. 5. When the monitoring index value of any one of the trend graphs G1 to G42 reaches the upper limit warning threshold value or the lower limit warning threshold value, a warning alarm of the monitoring index value is displayed as ON and an alarm mail for requesting inspection of the monitoring index is transmitted. For example, the message of the mail including the name of the monitoring index for which the alarm has been generated may be "Monitoring index OO reaches the warning value. Please inspect it." or the like.

Fig. 6 is a diagram illustrating an example of the vibration waveform analysis screen 70 displayed on the monitor 51 of the PC 40. As shown in Fig. 6, the vibration waveform analysis screen 70 displays the entire vibration waveform data corresponding to a data acquisition date and time (reference number 71), the vibration waveform data corresponding to several frames used to calculate the waveform feature quantity (reference number 72), an FFT graph (reference number 73), an FFT strength graph (reference number 74), an FFT 3D graph (reference number 75), and the like.

### <Embodiments according to software>

The monitoring data acquisition instruction unit 12, the waveform feature quantity calculation unit 13, the machine data collecting unit 11 and the storage instruction unit 14 of the control device 10, and the database processing unit 41, the sign management unit 42, the waveform analysis display unit 47, the image display unit 48 and the sound output unit 49 of the PC 40 may be realized by logic circuits (hardware) formed on an integrated circuit (IC chip) or realized by software using a central processing unit (CPU).

In the latter case, the control device 10 and the PC 40 include a CPU which executes commands of a program which is software for realizing each function, a read only memory (ROM) or a storage device (which are collectively referred to as "recording medium") in which the program and various types of data are recorded such that they are readably by a computer (or a CPU), a random access memory (RAM) which expands the program, and the like. In addition, the computer (or CPU) reads the program from the recording medium and executes the program to accomplish the object of the present invention. As the recording medium, "non- transitory concrete medium," for example, a tape, a disc, a card, a semiconductor memory, a programmable logic circuit and the like may be used. In addition, the program may be provided to the computer through any transfer medium (communication network, broadcast waves or the like) which can transfer the program. Further, one embodiment of the present invention may also be realized in the form of a data signal which realizes the program according to electronic transfer and is embedded in carrier wave.

The control device 10 and the PC 40 according to embodiments of the present invention may be realized by a computer. In this case, a monitoring program of the control device 10 which causes the computer to realize the control device 10 by operating the computer as each part (software element) included in the control device 10, and a computer readable recording medium in which the monitoring program is recorded are also included in the scope of the present invention.

### <Modified examples>

Next, modified examples in the monitoring system 1 will be described. Although the waveform feature quantity calculation unit 13 is mounted in the control device 10 in the above-described embodiments, a configuration in which the waveform feature quantity calculation unit 13 is mounted in the PC 40 may be used.

In addition, the waveform feature quantity calculation unit 13 is not essential and, for example, a configuration in which a sound volume is taken as a feature quantity, transmitted from the sound collecting unit 7 to the DB and associated with the machine data transmitted from the control device 10 may be employed.

Furthermore, a configuration in which the waveform feature quantity calculation unit 13 extracts features of waveforms from the sound data acquired by the sound collecting unit 7 may be employed.

Moreover, although the machine data, the waveform feature quantity and the data acquisition date and time information which are associated with one another are stored in the DB 30 via the PC 40 from the control device 10 in the above-described embodiments, a configuration in which the storage instruction unit 14 of the control device 10 directly transmits the associated data and information to the DB 30 and stores the associated data and information in the DB 30 without passing through the PC 40 may be employed.

In addition, although the configuration in which the machine data collected from the machine data measurement unit 20 is accumulated in the storage unit (not shown) included in the control device 10 is used in the above-described embodiments, a configuration in which the machine data is transmitted to the DB 30 and accumulated therein may be employed.

Furthermore, although the configuration in which the machine data of a data acquisition date and time instructed by the monitoring data acquisition instruction unit 12 to be acquired is extracted from the machine data collected by the machine data collecting unit 11 is used in the above-described embodiments, a configuration in which the monitoring data acquisition instruction unit 12 instructs the machine data measurement unit 20 to acquire data as does the vibration collecting unit 3 or the like may be employed.

Moreover, in the above-described embodiments, as the monitoring index of a trend graph created by the trend graphic creation display unit 43, the machine data and the waveform feature quantity stored in the DB 30 are directly corresponded, however for example, a result of operation performed on a certain machine data and a certain waveform feature quantity may be used as the monitoring index of a trend graph.

In addition, although the monitoring data acquisition instruction unit 12 transmits "data acquisition date and time information" to the vibration collecting unit 3, the sound collecting unit 8, the image processing system 25, the machine data collecting unit 11 or the waveform feature quantity calculation unit 13 and associates the machine data, the waveform feature quantity and the monitoring data (vibration waveform data, sound data, image data and the like) with one another by using the "data acquisition date and time" as a file name when the machine data, waveform feature quantity and monitoring data are stored in the DB 30 in the above-described embodiments, this is merely an example. That is, data acquisition ID information necessary to associate such data with each other is not limited to a data acquisition date and time and may be a data acquisition date and time and a serial number, or a serial number. Here, when a serial number is used as the data acquisition ID information, it is necessary to associate the serial number with the data acquisition date and time information in advance.

Furthermore, although the configuration in which acquired various types of data are stored in time series in the DB 30 is exemplified in the above-described embodiments, a configuration in which not only the data is stored in time series but also the acquired various types of data are divided for each process of the machine 5 when the data is acquired and stored as data in time series for each process may be employed.

As described above, the control device in an embodiment of the present invention outputs a control command for a control target on the basis of a plurality of control data acquired from the control target and is characterized by including a measuring instrument data acquisition instruction unit which instructs a measuring instrument for measuring a value indicating an operating state of the control target to acquire data at an arbitrarily settable timing, and a storage instruction unit which associates at least one of data of the measuring instrument acquired according to instruction of the measuring instrument data acquisition instruction unit and a feature quantity calculated according to the data, the plurality of control data acquired at the same time as when the data of the measuring instrument is acquired, and information which can specify the date and time when the data of the measuring instrument is acquired with one another and stores the associated data and information in a storage device.

According to the aforementioned configuration, the control data necessary to control the control target and the measuring instrument data other than the control data, which indicates the operating state of the control target and is measured by the measuring instrument, are acquired at the same time, associated with the information which can specify the acquisition date and time and collected. Accordingly, a relationship between a variation in data of the measuring instrument and the control data can be easily checked, and when there is a sign of an abnormality in the control target, detection of the sign of the abnormality and specifying a position at which the abnormality is generated, and the like can be easily performed by graphing on the basis of the acquisition date and time, for example.

Furthermore, since the measuring instrument data acquisition timing can be arbitrarily set, data valid for detection of a sign of an abnormality can be acquired using a small amount of data by appropriately setting the acquisition timing.

Further, the control device in an embodiment of the present invention may employ a configuration in which the measuring instrument is a vibration measuring instrument which measures vibration as the value indicating the operating state of the control target or a sound measuring instrument which measures sound as the value indicating the operating state of the control target.

As described above, when the control target starts to change from a normal operating state to an abnormal operating state, vibration and sound also change. Accordingly, it is desirable to use the vibration measuring instrument which measures vibration or the sound measuring instrument which measures sound as the measuring instrument.

Further, the control device in an embodiment of the present invention may include a waveform feature quantity calculation unit which calculates a waveform feature quantity according to vibration waveform data or sound waveform data.

According to the aforementioned configuration, the waveform feature quantity can be calculated according to the vibration waveform data or the sound waveform data.

Further, the control device in an embodiment of the present invention preferably has a configuration in which the timing is set in association with the control command or the control data.

According to the aforementioned configuration, since the measuring instrument data acquisition timing is set in association with the control command or the control data, the measuring instrument data acquisition timing may be set in association with, for example, a moment when a load is applied to the control target, a time when the control target initiates a certain operation, an operation in which the control target had a failure in the past, or the like, and thus valid data can be acquired using a smaller amount of data by detecting a sign of an abnormality.

The monitoring system in an embodiment of the present invention is characterized by including the control device, the storage device, and an information processing device having a trend graph creation display unit which accesses the storage device, generates a trend graph of a monitoring index determined on the basis of the stored data and causes a display device to display the trend graph.

According to the aforementioned configuration, the information processing device creates and displays a trend graph of monitoring indexes which are determined from data stored in the storage device, that is, the control data and the measuring instrument data acquired at the same time, or data of the feature quantity calculated from the measuring instrument data. Accordingly, it is possible to easily detect a sign of an abnormality and specify a position at which the abnormality is generated by checking such a trend graph. That is, it is possible to accurately specify a time optimized for abnormality detection, specify an index valid for abnormality detection, and determine and reconsider a threshold value valid for abnormality detection.

Further, the monitoring system in an embodiment of the present invention may have a configuration in which the information processing device includes an output unit which outputs data of the measuring instrument which corresponds to a time of a designated point when the point is designated on the trend graph.

According to the aforementioned configuration, when a point is designated on the trend graph, the output unit displays data of the measuring instrument which corresponds to the time of the designated point, for example, vibration waveform data or reproduces sound data to output sound.

Accordingly, it is possible to view actual vibration waveforms acquired or hear actual sound in addition to check variations in monitoring index values (a shift amount from a reference value, and the like) through trend graphs, and thus it is possible to detect a sign of an abnormality and specify a position at which the abnormality is generated more easily.

Meanwhile, the control device may be realized by a computer. In this case, a control program which causes the computer to function as the measuring instrument data acquisition instruction unit and the storage instruction unit of the control device, and a recording medium in which the control program is recorded are also included in the scope of the present invention.

The present invention is not limited to the above-described embodiments and can be modified in various manners within the range of the claims, and an embodiment obtained by combining technical means respectively disclosed in different embodiments is also included in the technical scope of the present invention. Further, a new technical feature can be formed by combining technical means respectively disclosed in embodiments.

### [Reference Signs List]

1 Monitoring system
3 Vibration collecting unit (measuring instrument)
5 Machine (control target)
7 Sound collecting unit (measuring instrument)
10 Control device
11 Machine data collecting unit
12 Monitoring data acquisition instruction unit (measuring instrument data acquisition instruction unit)
13 Waveform feature quantity calculation unit
14 Storage instruction unit
20 Machine data measurement unit
21 X-axis servo driver
22 Y-axis servo driver
23 θ-axis servo driver
24 Input/output terminal
25 Image processing system
26 Displacement sensor
30 DB (storage device)
31 Waveform feature quantity table
32 Machine data table
33 Torque table
34 Vibration waveform data storage unit
35 Image data storage unit
36 Sound data storage unit
40 PC (information processing device)
41 Database processing unit
43 Trend graph creation display unit
47 Waveform analysis display unit (output unit)
48 Image display unit (output unit)
49 Sound output unit (output unit)

## Claims

1. A control device, outputting a control command for a control target on the basis of a plurality of control data acquired from the control target, comprising:
a measuring instrument data acquisition instruction unit which instructs a measuring instrument for measuring a value indicating an operating state of the control target to acquire data at an arbitrarily settable timing; and
a storage instruction unit which associates at least one of data of the measuring instrument acquired according to instruction of the measuring instrument data acquisition instruction unit and a feature quantity calculated according to the data, the plurality of control data acquired at the same time at which the data of the measuring instrument is acquired, and information which can specify the date and time when the data of the measuring instrument is acquired with one another and stores the associated data and information in a storage device.

2. The control device according to claim 1, wherein the measuring instrument is a vibration measuring instrument which measures vibration as the value indicating the operating state of the control target or a sound measuring instrument which measures sound as the value indicating the operating state of the control target.

3. The control device according to claim 2, comprising a waveform feature quantity calculation unit which calculates a waveform feature quantity according to vibration waveform data or sound waveform data.

4. The control device according to any one of claims 1 to 3, wherein the timing is set in association with the control command or the control data.

5. A monitoring system comprising:
the control device according to any one of claims 1 to 4;
the storage device; and
an information processing device, including a trend graph creation display unit which accesses the storage device, generates a trend graph of a monitoring index determined on the basis of the stored data and causes a display device to display the trend graph.

6. The monitoring system according to claim 5, wherein the information processing device includes an output unit which outputs data of the measuring instrument which corresponds to a time of a designated point after the point is designated on the trend graph.

7. A control program for causing a computer to function as the control device according to claim 1, wherein the control program causes the computer to function as the measuring instrument data acquisition instruction unit and the storage instruction unit.

8. A computer-readable recording medium in which the control program according to claim 7 is recorded.
